# EUROPÄISCHE PATENTSCHRIFT

(11) **EP 2 195 205 B1**
(45) Veröffentlichungstag und Bekanntmachung des Hinweises auf die Patenterteilung: **10.10.2012**
(21) Anmeldenummer: 08804186.8
(22) Anmeldetag: 15.09.2008
(51) Int. Cl.: B60R 21/264

(54) **GASGENERATOR FÜR EIN AIRBAGMODUL**
GAS GENERATOR FOR AN AIR BAG MODULE
GENERATEUR DE GAZ POUR UN MODULE D'AIRBAG

(30) Priorität: 05.10.2007 DE 102007048735; 12.12.2007 DE 102007060451; 16.04.2008 DE 102008019863
(43) Veröffentlichungstag der Anmeldung: 16.06.2010
(73) Patentinhaber: Takata AG, 63743 Aschaffenburg (DE)
(72) Erfinder: REICHELT, Silvio, 04668 Grimma (DE); ZHANG, Jiang, 57072 Siegen (DE); DOLZHANSKIY, Vladimir, 63739 Aschaffenburg (DE); VON BREITENBACH, Gerrit, 63791 Karlstein (DE); KRATZ, Heiko, 61476 Kronberg (DE)
(74) Vertreter: Staroske, Sandro
(86) Internationale Anmeldenummer: PCT/EP2008/062225
(87) Internationale Veröffentlichungsnummer: WO 2009/047086

(56) Entgegenhaltungen:
- EP-A- 0 926 015
- EP-A- 1 433 671
- EP-A- 1 721 789
- DE-A1- 19 812 221
- US-B1- 6 290 256

## Beschreibung

Die Erfindung betrifft einen Gasgenerator für ein Airbagmodul nach dem Oberbegriff des Anspruchs 1.

Für die Aktivierung von Airbags sind Gasgeneratoren bekannt, die in einem Gasgeneratorengehäuse eine Treibladung mit einer Zündvorrichtung aufweisen. Die Treibladung ist in einer Kammer angeordnet. Außerhalb dieser Kammer ist im Gasgeneratorgehäuse ein Hauptgassatz vorgesehen. Im Crashfall wird zunächst die Treibladung gezündet, die ihrerseits den Hauptgassatz entzündet, durch den das in den Airbag einströmende Gas erzeugt wird.

Die Kammer für die Treibladung wird bei bekannten Gasgeneratoren durch eine becherförmige Hülse gebildet, wie es z.B. in der DE 198 12 221 offenbart ist. Die Hülse ist mit ihrem offenen Ende an einer Zündvorrichtung befestigt und das geschlossene Ende erstreckt sich bis in den Bereich des Gasgeneratorgehäuses. Die Hülse weist seitlich Durchbrüche auf, die vor Zündung der Treibladung durch eine Folie verschlossen sind. Nach Zündung der Treibladung durch die Zündvorrichtung wird die Folie durch die heißen Gase der Treibladung zerstört. Die heißen Gase treten durch die Durchbrüche in den Raum mit dem Hauptgassatz ein und entzünden diesen, wodurch die in den Airbag einströmenden Gase gebildet werden.

Die Treibladung liegt meist in Granulatform und der Hauptgassatz in Tablettenform vor. Durch die Anwendung einer becherförmigen Hülse für die Aufnahme der Treibladung ist ein aufwendiger Herstellungsprozess erforderlich. Hierbei muss zunächst das Granulat der Treibladung in den Becher eingefüllt werden. Anschließend muss das Unterteil des Gasgeneratorgehäuses mit der Zündvorrichtung auf den Becher aufgesetzt und mit diesem verbunden werden. Danach muss das Unterteil um 180° gedreht werden, so dass die Tabletten eingefüllt werden können.

Um gute Selbstzündeigenschaften des Gasgenerators zu gewährleisten, z.B. im Falle eines Fahrzeugbrandes, ist es notwendig, den Hauptgassatz kontrolliert abzubrennen bevor er durch eine zu hohe Wärmeeinwirkung seine Eigenschaften negativ verändert. Um die sichere Selbstzündung zu garantieren, sind ein reproduzierbarer und guter Kontakt der Frühzündsubstanz mit der Gehäusewand des Gasgenerators oder ausreichend stabile Wärmebrücken zwischen der Frühzündsubstanz und dem Gehäuse unerlässlich. Das ist bei der Verwendung einer becherförmigen Hülse für die Treibladung nicht immer gewährleistet, da wegen der Fertigungs- und Montagetoleranzen ein Luftspalt zwischen dem Boden der Hülse und dem Generatorgehäuse vorhanden sein kann. Ein weiterer Gasgenerator mit allen Merkmalen der Präambeln der Ansprüche 1 und 2 ist aus der US 6290256 B1 bekannt.

Der Erfindung liegt die Aufgabe zugrunde, die Fertigung von Gasgeneratoren zu vereinfachen. Weiterhin sollen die Selbstzündungseigenschaften und damit die Sicherheit des Gasgenerators verbessert werden, um diesen insbesondere unempfindlicher gegenüber Montagetoleranzen zu machen.

Erfindungsgemäß wird das gemäß den Merkmalen des Anspruchs 1 und Anspruchs 2 erreicht.

Bei einem Gasgenerator für ein Airbagmodul mit einem Gasgeneratorgehäuse, in dem eine erste Kammer für die Aufnahme einer Treibladung zur Entzündung eines in einer zweiten Kammer enthaltenen Hauptgassatzes sowie eine Zündvorrichtung für die Entzündung der Treibladung vorgesehen sind, ist erfindungsgemäß die erste Kammer für die Aufnahme der Treibladung durch ein Rohr begrenzt , an dessen ersten Ende die Zündvorrichtung angeordnet ist und dessen zweites Ende zumindest annähernd an das Gasgeneratorgehäuse heranreicht, wobei die erste und die zweite Kammer so gegeneinander abgetrennt sind, dass keine Teile der Treibladung über das zweite Ende des Rohres vor Zündung der Treibladung in die zweite Kammer gelangen können.

Bei dieser Anordnung können die heißen Gase der Treibladung zwischen dem zweiten Ende des Rohres und dem Gasgeneratorgehäuse aus der ersten in die zweite Kammer gelangen.

Der Vorteil dieser Anordnung besteht darin, dass der Herstellungsprozess des Gasgenerators vereinfacht wird, weil die Treibladung und die Tabletten des Hauptgassatzes von der gleichen Seite in die erste bzw. zweite Kammer eingefüllt werden können, d.h., dass eine Drehung des Gehäuses nach der Einfüllung der Treibladung, wie bei Verwendung einer becherförmigen Hülse als Begrenzung der ersten Kammer, nicht erforderlich ist.

Ein weiterer Vorteil besteht darin, dass Durchbrüche im Rohr entfallen können, da die bei Zündung der Treibladung sich bildenden heißen Gase durch den Zwischenraum zwischen dem Rohrende und dem Gasgeneratorgehäuse aus der ersten in die zweite Kammer mit dem Hauptgassatz strömen können.

Die Erfindung ist in unterschiedlichen Ausführungsformen realisierbar. So kann das zweite Ende des Rohres am Gasgeneratorgehäuse anliegen, das dort durch den nach Zündung der Treibladung im Rohr entstehenden Druck so verformbar ist, dass ein Zwischenraum zwischen dem zweiten Rohrende und dem Gasgeneratorgehäuse entsteht. Dabei können vor der Zündung der Treibladung zwischen dem Generatorgehäuse und dem anliegenden zweiten Ende des Rohres durch Fertigungstoleranzen bedingte kleine Spalte vorhanden sein. Es muss lediglich gewährleistet sein, dass keine Teile der Treibladung in die zweite Kammer gelangen.

Weiterhin ist es möglich, dass zwischen dem Gasgeneratorgehäuse und dem zweiten Ende des Rohres ein Zwischenraum vorgesehen ist, der durch eine Folie verschlossen ist, die nach Zündung der Treibladung durch den Druck in der ersten Kammer aufreißbar ist.

Bei Verwendung eines topfförmigen Gasgenerators, wie er bei Fahrerairbags üblich ist, erstreckt sich das Rohr zwischen der vom Boden des Gasgenerators in diesen erstreckenden Zündvorrichtung und dem Deckel des Gasgenerators.

Bei einer weiteren Ausführungsform ist vorgesehen, dass eine Kammer zum Anordnen einer pyrotechnische Ladung vorgesehen ist, weiterhin ein Gehäuse , das die Kammer zumindest teilweise umgibt; ein Rohr , das einen Abschnitt der Kammer begrenzt; ein relativ zum Rohr bewegbares Teil, das die Kammer zum Gehäuse hin begrenzt; Mittel zum Ausüben einer Rückstellkraft auf das bewegbare Teil , um dieses in thermischem Kontakt mit dem Gehäuse zu halten, so dass die Kammer über das bewegbare Teil und das Gehäuse in thermischem Kontakt mit der Umgebung des Gehäuses steht.

Die Mittel zum Ausüben einer Rückstellkraft sorgen dafür, dass die Kammer und damit eine in ihr angeordnete pyrotechnische Ladung in gutem thermischen Kontakt mit der Umgebung des Gasgeneratorgehäuses steht, so dass eine frühzeitige Zündung der pyrotechnischen Ladung erfolgt, wenn der Gasgenerator einer hohen Temperatur ausgesetzt ist, die von einer externen Wärmequelle (beispielsweise einem Brand in der Nähe des Gasgenerators) erzeugt wird.

Insbesondere wird durch eine frühzeitige Zündung der pyrotechnischen Ladung ihr kontrolliertes Abbrennen erreicht und damit verhindert, dass sich in der Kammer ein Druck aufbaut, der zur Fragmentierung des Gasgenerators führt. Zudem wird durch eine frühzeitige Zündung verhindert, dass Komponenten (insbesondere das Gehäuse) des Gasgenerators durch die hohe Temperatur in ihrer Stabilität stark geschwächt werden, bevor die pyrotechnische Ladung zündet.

Der gute Wärmekontakt wird erfindungsgemäß dadurch erreicht, dass das bewegbare Teil, das die Kammer zum Gehäuse hin begrenzt, durch die Mittel zur Ausübung einer Rückstellkraft in gutem thermischem Kontakt zum Gehäuse gehalten und das Auftreten eines Spaltes zwischen dem bewegbaren Teil und dem Gehäuse (d.h. einer Gehäuseinnenwand) vermieden wird.

In einer Variante ist die pyrotechnische Ladung eine Frühzündladung, die dazu dient, eine weitere pyrotechnische Ladung (den eigentlichen Gassatz zum Erzeugen von Gas, das zum Aufblasen des Gassacks genutzt wird) zu zünden. Eine derartige Frühzündladung kann z.B. aus einem Frühzündmittel bestehen, das eine niedrigere Selbstentzündungstemperatur als der eigentliche pyrotechnische Gassatz besitzt. In einer anderen Ausführungsform weist die Frühzündladung eine (konventionelle) Boosterladung auf, der ein Frühzündmittel beigemischt ist. Durch den guten Wärmekontakt zwischen der Kammer und der Umgebung des Gasgenerators wird sichergestellt, dass das Frühzündmittel der Frühzündladung schnell genug zündet und somit eine möglichst frühe Zündung und damit ein kontrolliertes Abbrennen des eigentlichen Gassatzes erfolgt.

Beispielsweise kann das Gehäuse aus einem Oberteil und einem Unterteil gebildet werden, die insbesondere durch Verschweißen miteinander verbunden werden. Hierbei wird vor dem Verbinden das Unterteil gegen das Oberteil gedrückt, wobei der Fall eintreten kann, dass das Unterteil unmittelbar vor dem Verbinden durch in dem Gehäuse angeordnete Gasgeneratorbauteile (z.B. elastische Filterelemente) wieder von dem Oberteil weggedrückt wird und ein Spalt zwischen der Kammer und dem Gehäuse (dem Unterteil oder dem Oberteil) entsteht. Durch die Mittel zur Ausübung einer Rückstellkraft wird insbesondere die Bildung eines Spaltes beim Verbinden der Gehäuseteile weitgehend verhindert.

Beispielsweise sorgen die Mittel zur Ausübung einer Rückstellkraft dafür, dass das bewegbare Teil in einer Position gehalten wird, in der es an einer Innenseite des Gehäuses anliegt. Zudem können die Mittel zur Ausübung einer Rückstellkraft auf das bewegbare Teil so ausgebildet sein, dass sie das bewegbare Teil gegen das Gehäuse vorspannen.

In einer anderen Variante der Erfindung erstreckt sich das Rohr mit einem Ende in Richtung einer Innenseite des Gehäuses, d.h. das Ende ist der Innenseite des Gehäuses zugewandt. Hier kann das Rohr zumindest abschnittsweise eine hohlzylindrische Form aufweisen, wobei ein Ende des Rohres der Innenseite des Gasgeneratorgehäuses zugewandt und im Bereich der Gehäuseinnenseite angeordnet ist.

In einer weiteren Ausgestaltung der Erfindung ist das bewegbare Teil flanschartig ausgebildet, wobei sich ein erster Abschnitt des bewegbaren Teiles entlang eines inneren Umfanges des Rohres erstreckt und ein zweiter Abschnitt die Öffnung, die in einem Ende des Rohres ausgebildet ist, zumindest teilweise abdeckt. In dieser Variante bildet das bewegbare Teil somit einen deckelartigen Verschluss zum Verschließen der ersten Kammer zum Gehäuse hin.

Insbesondere kann der zweite Abschnitt des bewegbaren Teiles mit einer Seite an einer Innenseite des Gehäuses anliegen. Der erste Abschnitt ragt z.B. so in die Öffnung des Endes des Rohres, das der Gehäuseinnenseite zugewandt ist, hinein; dass eine Bewegung des bewegbaren Teils durch das Rohr geführt wird. Hierdurch ist das bewegbare Teil im Wesentlichen nur in einer Richtung auf die Gehäuseinnenseite zu bewegbar. Beispielsweise ist das bewegbare Teil über den ersten Abschnitt so in die Öffnung des Rohres eingesteckt, dass seine Bewegung im Wesentlichen ausschließlich entlang einer Achse des Rohres erfolgen kann.

Die Mittel zum Ausüben einer Rückstellkraft auf das bewegbare Teil können zum Beispiel ein elastisches Element (etwa aus einem Gummi oder einem Kunststoff) und/oder ein federartiges Element umfassen. Insbesondere ist ein elastisches Element, das als Mittel zur Ausübung einer Rückstellkraft vorgesehen ist, bis zu einer Temperatur wärmebeständig, die oberhalb der Zündtemperatur der in der Kammer angeordneten pyrotechnischen Ladung liegt.

Das elastische Element ist in einer Ausführungsform der Erfindung zwischen dem Ende des Rohres und der Innenseite des Gehäuses angeordnet, zum Beispiel in Form eines Ringes (z.B. O-Ring) aus einem elastischen Material. Ist das bewegbare Teil, wie oben beschrieben, flanschartig ausgebildet, kann das elastische Element zwischen dem Ende des Rohres (d.h. zwischen einem der Gehäuseinnenseite zugewandten Rand dieses Endes) und einer Auskragung des zweiten Abschnitts des bewegbaren Teiles angeordnet sein. Hierbei erzeugt das elastische Element eine Rückstellkraft auf das bewegbare Teil, wenn dieses in Richtung des Rohres gedrückt wird, dass der deckelartige zweite Abschnitt des bewegbaren Teiles in thermischem Kontakt mit der Gehäuseinnenseite verbleibt, z.B. mit einer Seite an dieser anliegt.

Das elastische Element kann zwar in Form eines Ringes ausgebildet sein; es muss jedoch nicht unbedingt einen kreisförmigen Querschnitt aufweisen, sondern kann zum Beispiel auch einen ovalen Querschnitt besitzen. Insbesondere kann zwischen dem elastischen Element und einem flanschartig ausgebildeten Teil (d.h. dem ersten Abschnitt des bewegbaren Teiles) eine Spielpassung bestehen. Beispiele für Materialien zum Ausbilden des elastischen Elementes sind hitzebeständige Elastomere, wie zum Beispiel FPM oder FFPM (gemäß DIN/ISO 1629).

In einer Weiterbildung der Erfindung stellt die Kammer mit der pyrotechnischen Ladung eine erste Kammer des Gasgenerators und die pyrotechnische Ladung eine erste pyrotechnische Ladung (z.B. in Form einer Frühzündladung) dar, wobei das Gehäuse neben der ersten Kammer eine zweite Kammer zum Aufnehmen einer zweiten pyrotechnischen Ladung (z.B. in Form eines Hauptgassatzes, der durch heißes Gas, das beim Zünden des Frühzündsatzes entsteht, gezündet werden kann) aufweist. In dieser Variante kann ein elastisches Element, das als Mittel zum Ausüben einer Rückstellkraft auf das Teil ausgebildet ist, gleichzeitig die erste Kammer gegenüber der zweiten Kammer abdichten, d.h. insbesondere vor dem Zünden der ersten pyrotechnischen Ladung ein Überströmen von Gas aus der ersten Kammer in die zweite Kammer oder umgekehrt verhindern oder zumindest dem Überströmen entgegenwirken.

In einer Weiterbildung ist das bewegbare Teil so ausgebildet, dass es bei Einwirken eines Gasdrucks, der bei Zünden der pyrotechnischen Ladung entsteht, eine Ausströmöffnung freigibt, aus der Gas aus der Kammer ausströmen kann. Insbesondere kann, in dem Fall, dass der Gasgenerator eine erste und eine zweite Kammer aufweist, Gas über die Ausströmöffnung aus der ersten Kammer des Gasgenerators in die zweite Kammer überströmen, so dass durch die erste pyrotechnische Ladung in der ersten Kammer erzeugte Gase ein Zünden der zweiten pyrotechnischen Ladung in der zweiten Kammer bewirken können.

Es wird darauf hingewiesen, dass der Gasgenerator nicht nur eine, sondern mehrere Hauptkammern (zweite Kammern) aufweisen kann. Beispielsweise ist jeder der Hauptkammern eine Zündkammer (erste Kammer) zugeordnet. In einer Variante weist der Gasgenerator zwei Zündkammern auf, die jeweils einer Hauptkammer zugeordnet sind.

In einer weiteren Ausgestaltung der Erfindung weist das bewegbare Teil eine Sollbruchstelle auf, die bricht, wenn der Gasdruck in der Kammer einen bestimmten Wert übersteigt, so dass das bewegbare Teil im Bereich der Sollbruchstelle eine Ausströmöffnung ausbildet (freigibt).

Bei einer weiteren Ausführungsform ist die erste Kammer für die Aufnahme der Treibladung durch ein Rohr begrenzt, an dessen erstem Ende die Zündvorrichtung angeordnet ist, und dessen zweites Ende in engem Kontakt zu einem elastischen Gasleitblech steht, das zumindest abschnittsweise innen am Gasgeneratorgehäuse anliegt.

Durch die gezielte Einstellung der Steifigkeit und elastischen Nachgiebigkeit des Gasleitbleches sind ein guter Kontakt mit dem Gasgeneratorgehäuse und damit gute Frühzündeigenschaften gewährleistet. Es ist zweckmäßig, dass zum Einstellen der Steifigkeit und elastischen Nachgiebigkeit im Boden des Gasleitbleches mindestens eine ringförmige Sicke vorgesehen ist. Durch eine entsprechende Kontaktlänge der Sicke mit dem Gasgeneratorgehäuse können Fertigungs- und Montagetoleranzen in axialer Richtung ausgeglichen werden.

Der enge Kontakt des zweiten Endes des Rohres mit dem Gasleitblech kann dadurch gewährleistet werden, dass das Gasleitblech einen napfförmigen Abschnitt aufweist, in den das zweite Ende des Rohres eingreift, wobei das zweite Ende eng an der Seitenwand des napfförmigen Abschnitts anliegt, ohne mit diesem durch Hilfsmittel verbunden zu sein. Vorzugsweise liegt das Rohr im Bereich seines ersten Endes mit seiner Innenwand mit Presssitz an einer Zündvorrichtungsaufnahme und im Bereich seines zweiten Endes mit seiner Außenwand mit Presssitz an der Seitenwand des napfförmigen Abschnitts an. Der Presssitz an der Zündvorrichtungsaufnahme und im napfförmigen Abschnitt ist vorzugsweise unterschiedlich stark.

Der Boden der napfförmigen Vertiefung liegt zumindest abschnittsweise eng am Generatorgehäuse an.

Es ist zweckmäßig, dass das Generatorgehäuse und das Gasleitblech im Bereich des zweiten Endes des Rohres durch den nach Zündung der Treibladung im Rohr entstehenden Druck so verformbar sind, dass ein Zwischenraum zwischen dem zweiten Ende des Rohres und dem Gasleitblech und damit eine Verbindung zwischen der ersten und der zweiten Kammer vorhanden ist, oder ein Zwischenraum zwischen dem ersten Ende des Rohres und der Zündvorrichtung und damit eine Verbindung zwischen der ersten und der zweiten Kammer vorhanden ist.

Alternativ kann es ebenfalls zweckmäßig sein, dass das Gasgeneratorgehäuse auf der Seite des ersten Endes des Rohres bzw. der Zündvorrichtung durch die nach der Zündung der Treibladung im Rohr entstehende Druckwelle so verformbar ist, dass ein Zwischenraum zwischen dem ersten Ende des Rohres und der Zündvorrichtung und damit eine Verbindung zwischen der ersten und der zweiten Kammer vorhanden ist, oder ein Zwischenraum zwischen dem zweiten Ende des Rohres und dem Gasleitblech und damit eine Verbindung zwischen der ersten und der zweiten Kammer vorhanden ist.

Die bei Zündung der Treibladung sich bildenden heißen Gase können durch diesen Zwischenraum aus der ersten in die zweite Kammer strömen, in der sich der Hauptgassatz befindet. Dadurch können Durchbrüche im Rohr entfallen.

Das Rohr erstreckt sich bei Verwendung eines topfförmigen Gasgenerators vorzugsweise zwischen der sich vom Boden des Gasgenerators in diesen erstreckenden Zündvorrichtung und dem Deckel des Gasgenerators.

Die Erfindung soll in Ausführungsbeispielen anhand von Zeichnungen erläutert werden. Es zeigen:
- Fig. 1: einen Schnitt durch eine erste Ausführungsform eines topfförmigen Gasgenerators vor Zündung der Treibladung;
- Fig. 2: den Gasgenerator nach Fig. 1 nach Zündung der Treibladung;
- Fig. 3: schematisch wesentliche Schritte des Herstellungsprozesses eines Gasgenerators mit einer becherförmigen Hülse als Treibladungsbehälter;
- Fig. 4: schematisch wesentliche Schritte des Herstellungsprozesses eines Gasgenerators mit einem Rohr als Treibladungsbehälter;
- Fig. 5: einen Schnitt durch eine zweite Ausführungsform eines topfförmigen Gasgenerators vor Zündung der Treibladung;
- Fig. 6: den Gasgenerator nach Fig. 5 nach Zündung der Treibladung;
- Fig. 7: einen Gasgenerator gemäß einer weiteren Ausführungsform der Erfindung;
- Fig. 8: den Gasgenerator der Fig. 7 nach Zündung;
- Fig. 9: einen Gasgenerator der Fig. 7 bei einem Bonfire-Test;
- Fig. 10: einen Schnitt durch einen erfindungsgemäßen topfförmigen Gasgenerator vor Zündung der Treibladung;
- Fig. 11a,b: jeweils eine Hälfte des Gasgenerators nach Fig. 10 nach Zündung der Treibladung.

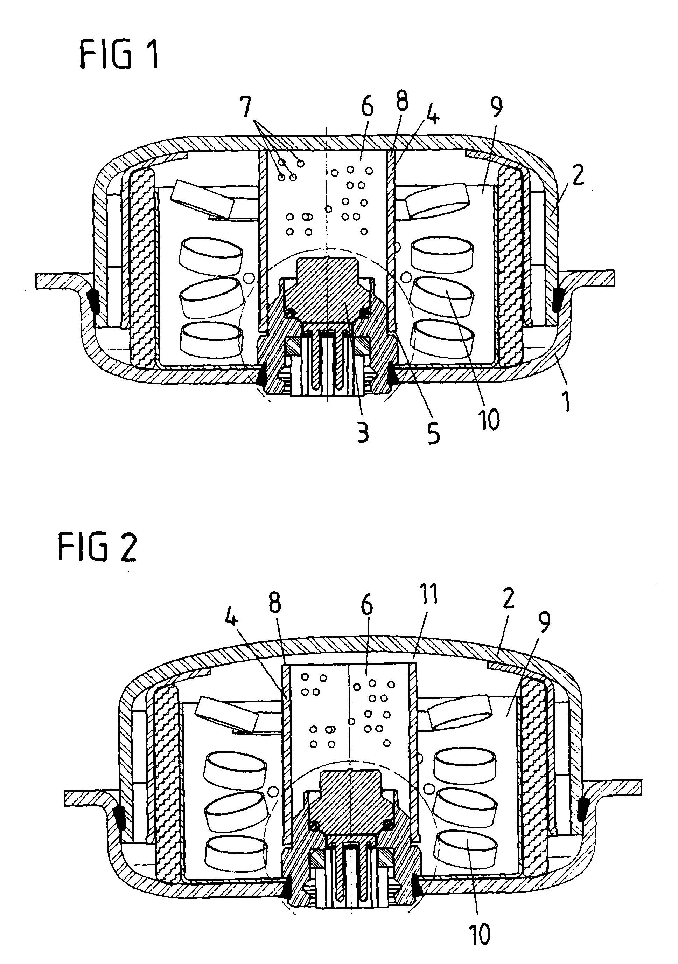

Der Gasgenerator nach Fig. 1 weist einen Boden 1 und einen Deckel 2 auf, die zusammen das Gehäuse des Gasgenerators bilden. Mit dem Boden 1 ist eine Zündvorrichtung 3 verbunden, die in den Gasgenerator hineinragt. Mit der Zündvorrichtung 3 ist ein erstes Ende 5 eines Rohres 4 verbunden, das eine erste Kammer 6 für die Aufnahme einer Treibladung 7 umschließt. Die Verbindung zwischen dem Rohr 4 und der Zündvorrichtung entspricht der einer bekannten Anordnung zwischen einer becherförmigen Hülse und der Zündvorrichtung. Die Treibladung 7 liegt in Form von Granulat vor.

Das zweite Ende 8 des Rohres 4 reicht bis an den Deckel 2 und dichtet so die erste Kammer 6 nach oben und gegenüber einer zweiten Kammer 9 für einen Hauptgassatz 10 ab, der dort in Tablettenform vorgesehen ist. Die Abdichtung zwischen dem Ende 8 des Rohres 4 und dem Deckel 2 muss nicht gasdicht sein. Vielmehr können diese Bauteile mit üblichen Toleranzen gefertigt sein, so dass geringe Spalte vorhanden sind. Es muss lediglich verhindert werden, dass Granulat der Treibladung vor deren Zündung in die Kammer 9 gelangt.

Nach Zündung der Treibladung 7 entsteht innerhalb der Kammer 6 aufgrund der sich dabei entwickelnden Gase ein Überdruck, der den Deckel 2 des Generatorgehäuses nach außen verformt, wie es in der Fig. 2 dargestellt ist. Dadurch entsteht zwischen dem zweiten Ende 8 des Rohres 4 und dem Deckel 2 ein Spalt 11, durch den die heißen Gase aus der Kammer 6 in die Kammer 9 strömen können, um dort den Hauptgassatz 10 zu entzünden. Dieser liefert die Gase für die Entfaltung des Gassacks.

Wegen des entstehenden Spaltes 11 sind Durchbrüche im Rohr 4 nicht erforderlich, so dass die Herstellung gegenüber einer becherförmigen Hülse vereinfacht wird.

Aber auch der Herstellungsprozess des Gasgenerators wird durch die Verwendung des Rohres 4 vereinfacht.

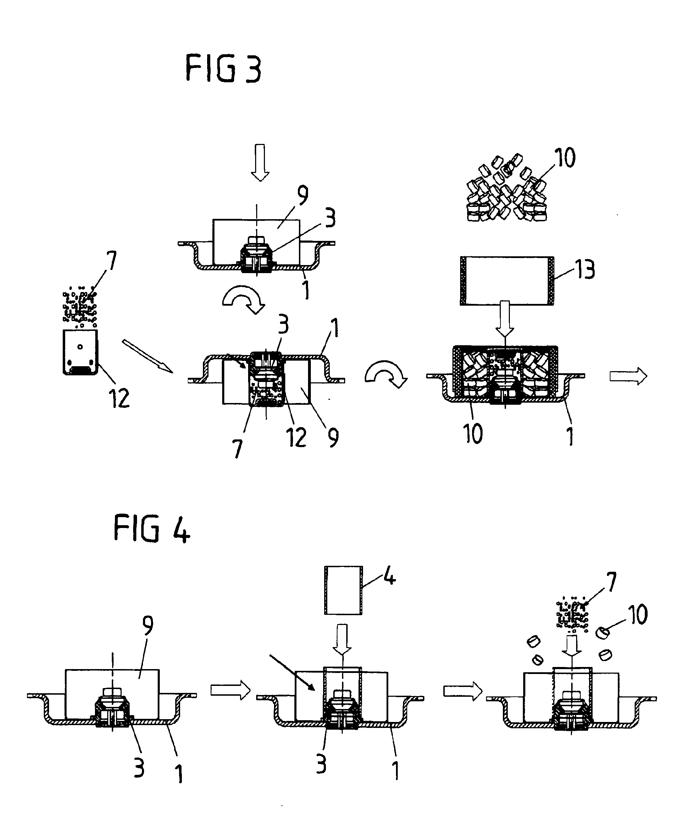

Wie die Fig. 3 zeigt, musste der Gasgenerator während des Herstellungsprozesses mindestens einmal gewendet werden. Zunächst wurde eine becherförmige Hülse 12 mit dem Granulat der Treibladung 7 befüllt. Danach wurde der Boden 1 des Gasgenerators auf die Hülse 12 gesetzt und mit der Zündvorrichtung 3 verbunden. Um nun den Hauptgassatz 10 von oben in die Kammer 9 einbringen zu können, musste der mit der Hülse 12 verbundene Boden 1 um 180° geschwenkt werden. In dieser Lage wurde zusätzlich auch ein Filterring 13 eingebracht.

Bei der Verwendung des Rohres 4 als Treibladungsbehälter vereinfacht sich dieser Herstellungsprozess, wie aus der Fig. 4 ersichtlich ist. In den mit der Öffnung nach oben weisenden Boden 1, an dem die Zündvorrichtung 3 sowie die Ummantelung der Kammer 9 befestigt ist, wird das Rohr 4 eingesetzt und mit der Zündvorrichtung 3 verbunden. Anschließend kann sowohl die Treibladung 7 als auch der Hauptgassatz 10 von oben eingebracht werden. Das Wenden des Bodens 1 kann deshalb entfallen.

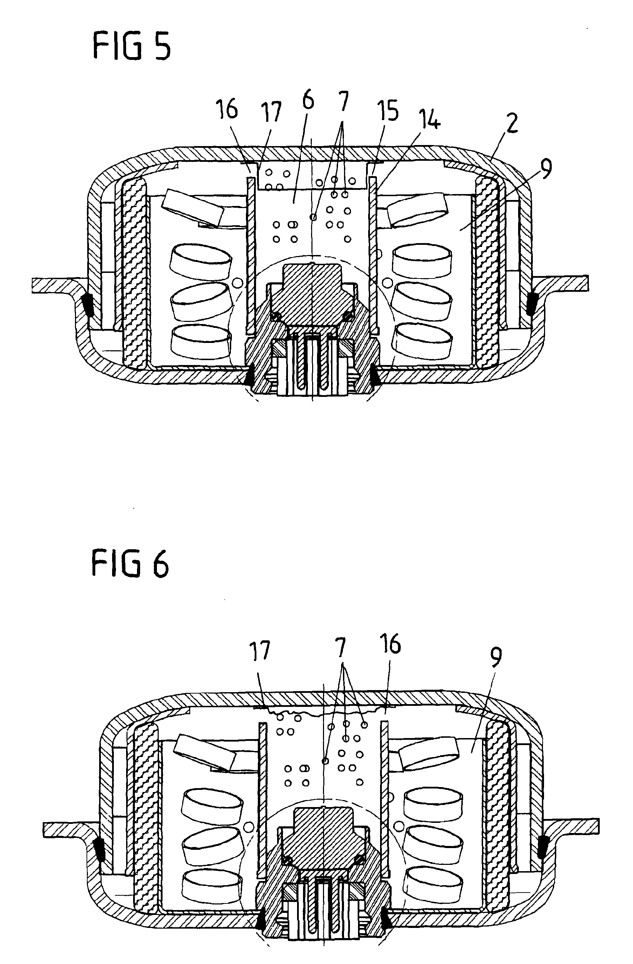

Bei der Ausführungsform nach Fig. 5 reicht ein Rohr 14, das anstelle des Rohres 4 der ersten Ausführungsform angeordnet ist, mit seinem zweiten Ende 15 nicht bis an den Deckel 2 heran. Der dadurch zwischen diesem und dem Ende 15 entstehende Spalt 16 ist in diesem Fall mit einer Folie 17 verschlossen, so dass vor Zündung des Gasgenerators die Treibladung 7 nicht in die Kammer 9 gelangen kann.

Infolge des nach Zündung der Treibladung 7 in der Kammer 6 entstehenden Überdrucks wird die Folie 17 zerstört, so dass nunmehr die heißen Gase der Treibladung 7 durch den Spalt 16 in die Kammer 9 eintreten können.

Auch bei dieser zweiten Ausführungsform vereinfacht sich der Herstellungsprozess, wie in der Fig. 4 dargestellt.

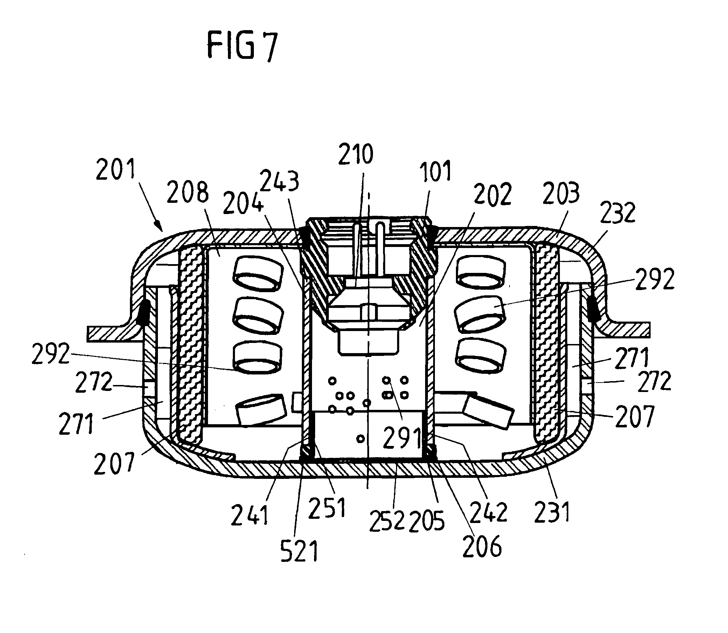

Der Gasgenerator 201 der Fig. 7 weist eine erste Kammer 202 auf, die von einem Gehäuse 203 umgeben ist, wobei das Gehäuse 203 aus einem unteren Gehäuseteil 231 (Napf), das mit einem oberen Gehäuseteil 232 (Base) verbunden ist, gebildet ist. Angrenzend an die erste Kammer 202 ist eine zweite Kammer 208 vorhanden, die die erste Kammer 202 ringförmig umgibt. Die erste Kammer 202 enthält eine erste pyrotechnische Ladung in Form einer (z.B. in Form von Granulat ausgebildeten)Frühzündladung 291, die eine konventionelle Boosterladung, der ein Frühzündmittel beigemischt ist, aufweist. Die Frühzündladung 291 dient zum Zünden einer zweiten pyrotechnischen Ladung in Form eines Hauptgassatzes 292 der zweiten Kammer 208. Der Gassatz 292 wiederum dient zum Erzeugen von Gas, mit dem ein Gassack (nicht dargestellt) befüllt werden soll. Das in der Frühzündladung 291 enthaltene Frühzündmittel zeichnet sich durch eine im Vergleich zum Hauptgassatz 292 niedrigere Zündtemperatur aus, z. B. ungefähr 160°C, während der Hauptgassatz z.B. eine Zündtemperatur von etwa 260°C besitzt.

Die Kammer 202 wird durch ein Rohr 4 (Boosterrohr) sowie zum unteren Gehäuseteil 203 hin durch ein bewegbares Teil in Form eines Verschlusses 205 begrenzt. Genauer erstreckt sich das rohrförmige, erste Teil 204 auf eine Gehäuseinnenseite des unteren Gehäuseteiles 231 zu, so dass ein Ende 241 des Rohres 204 im Bereich der Gehäuseinnenseite angeordnet ist.

Der Verschluss 205 weist einen ersten Abschnitt 251, der hohlzylindrisch ausgebildet ist und sich entlang eines inneren Umfanges des Rohres 204 erstreckt, sowie einen zweiten Abschnitt 252 auf, der eine Öffnung 242 in dem Ende 241 des ersten Teiles 204 deckelartig abdeckt und einstückig mit dem ersten Abschnitt 251 verbunden ist.

Der erste Abschnitt 251 ist von dem zweiten, deckelartigen Abschnitt 252 derart abgebogen, dass eine Auskragung 521 entsteht, die vom ersten Abschnitt 251 absteht und über die Öffnung 242 herausragt. Zwischen dem Ende 241 des Rohres 204 (genauer zwischen einer Seite eines Randes des Endes 241, die dem Gehäuseteil 231 zugewandt ist) und der Innenwand des Gehäuseteils 231 ist ein Mittel zum Ausüben einer Rückstellkraft auf den Verschluss 205 in Form eines elastischen Elementes angeordnet. In dem Ausführungsbeispiel der Figur 7 bildet ein Kunststoffring 206 das elastische Element, das einen äußeren Umfang des ersten Abschnitts 251 des Verschlusses 205 umgibt.

Der Kunststoffring 206 ist derart elastisch ausgebildet und angeordnet, dass er den Verschluss 205 in Position relativ zu dem unteren Gehäuseteil 231 hält, so dass eine Seite des zweiten Abschnitts 252 an der Innenseite des Gehäuseteils 231 anliegt und ein Spalt zwischen der ersten Kammer (d.h. zwischen dem Abschnitt 252) und dem Gehäuseteil 231 soweit wie möglich vermieden wird.

Insbesondere ermöglicht der Kunststoffring 206, dass die Bildung eines Spaltes zwischen der Kammer 202 und dem Gehäuseteil 231 vermieden wird, wenn das Gehäuseteil 231 mit dem oberen Gehäuseteil 232 verbunden (verschweißt) wird. Durch die Rückstellkraft auf den Verschluss 205 wird erreicht, dass er sich mit dem unteren Gehäuseteil 231 mitbewegt, wenn dieses durch Einwirken einer Kraft von elastischen Komponenten im Innern des Gasgenerators, zum Beispiel von elastischen Filtern 207, vor dem Verschweißen von dem oberen Gehäuseteil 232 weggedrückt wird.

Ein derartiges Auseinanderdrücken der Gehäuseteile 231, 232 kann erfolgen, obwohl zwischen Abschnitten der beiden Gehäuseteile eine Reibungskraft wirkt. Insbesondere kann während des Verschweißens der beiden Gehäuseteile aufgrund der Temperaturerhöhung die Reibungskraft zwischen den beiden Gehäuseteilen reduziert werden, so dass es zwar nicht vor dem Verschweißen aber während des Verschweißens zu einem Auseinanderdrücken der Gehäuseteile 231, 232 kommt. Auch in diesem Fall verhindert die erfindungsgemäße Konstruktion durch den bewegbaren Verschluss 205 und das elastische Kunststoffelement 206 das Entstehen eines Spaltes zwischen der ersten Kammer 202 und dem Gehäuseteil 231.

Zum Zünden der Frühzündladung 291 in der ersten Kammer 202 weist der Gasgenerator 201 eine Zündvorrichtung 210 auf, die an einer Aufnahme 101 angeordnet ist. Die Aufnahme 101 begrenzt ein zweites Ende 243 des Rohres 204, das dem ersten Ende 241 gegenüberliegt. Beispielsweise ist das zweite Ende 243 per Presspassung auf die Aufnahme 101 aufgesteckt.

Dies hat zur Folge, dass bei Einwirken einer hohen Temperatur auf den Gasgenerator die Frühzündladung 291 früh zündet, was zu einer frühzeitigen Zündung des Hauptgassatzes 292 führt. Die frühzeitige Zündung bewirkt ein kontrolliertes Abbrennen, wodurch ein überhöhter Innendruck insbesondere in der zweiten Kammer 208 vermieden wird.

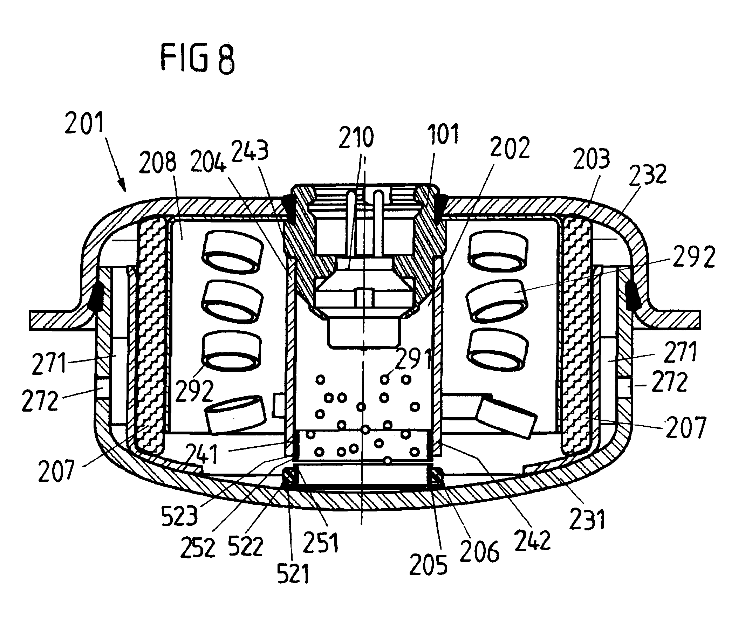

Zum Zünden des Hauptgassatzes 292 muss Gas aus der ersten Kammer 202 in die zweite Kammer 208 gelangen. Hierfür weist das Teil 205 eine Sollbruchstelle auf, die bei Einwirken eines Drucks in der ersten Kammer 202 bricht und eine Ausströmöffnung freigibt, über die Gas aus der ersten Kammer 202 in die zweite Kammer 208 überströmen kann. Dies ist in Fig. 8 dargestellt.

Es wird darauf hingewiesen, dass die Erfindung natürlich nicht auf Gasgeneratoren mit zwei Kammern beschränkt ist. Sie erstreckt sich z.B. auch auf Gasgeneratoren, die nur eine Kammer aufweisen, d.h. ohne separate Frühzündladung arbeiten. Des Weiteren kann ein erfindungsgemäßer Gasgenerator z.B. zwei erste Kammern mit jeweils einer Frühzündladung und zwei weitere Kammern aufweisen, die einen Hauptgassatz enthalten.

Fig. 8 betrifft die Situation, nachdem unter Einwirkung äußerer Hitze ein Zünden der Frühzündladung 291 erfolgt ist. Die gezündete Frühzündladung 291 setzt Gas frei, wobei der in der Kammer 202 entstehende Gasdruck das untere Gehäuseteil 231 vom Rohr 204 weg verbiegt und das Teil 205 durch den in der Kammer 202 herrschenden Innendruck vom Rohr 204 (nach unten) weg bewegt wird.

Dadurch verlängert sich der Teilbereich des hohlzylindrischen ersten Abschnitts 251 des Verschlusses 205, der nicht in das Rohr 204 hineinragt. In diesem Teilbereich des ersten Abschnitts 252 ist eine Sollbruchstelle 522 vorgesehen, die bricht, wenn der Innendruck in der ersten Kammer 202 einen bestimmten Wert überschreitet, wobei bei Zerbrechen der Sollbruchstelle 522 eine Öffnung 523 freigegeben wird, die zum einen durch eine Passage zwischen dem Ende 241 des Rohres 204 und dem Kunststoffring 206 und zum anderen durch eine Öffnung in dem Abschnitt 251 im Bereich der gebrochenen Sollbruchstelle 522 gebildet wird. Über die Öffnung 523 kann Gas aus der ersten Kammer 202 in die zweite 208 überströmen, um dort den Hauptgassatz 292 zu zünden. Das durch den gezündeten Hauptgassatz 292 in der zweiten Kammer 208 erzeugte Gas strömt jeweils über die Filter 207 und Räume 271 durch eine Ausströmöffnung 272 in einen Gassack (nicht dargestellt) ein.

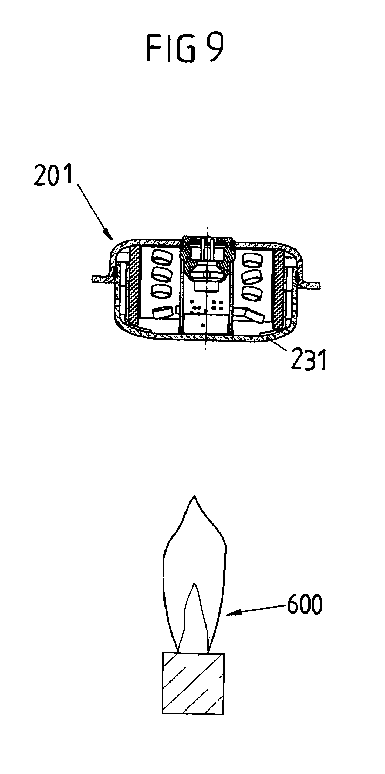

Fig. 9 illustriert die Lage eines erfindungsgemäßen Gasgenerators bei einer Variante des so genannten Bonfire-Tests zum Prüfen der Hitzebeständigkeit des Gasgenerators, nämlich die so genannte Lage des Gasgenerators "vom Feuer". In dieser Lage wirkt eine äußere Hitze einer Hitzequelle 600 überwiegend auf das untere Gehäuseteil 231 des Gasgenerators 201 ein.

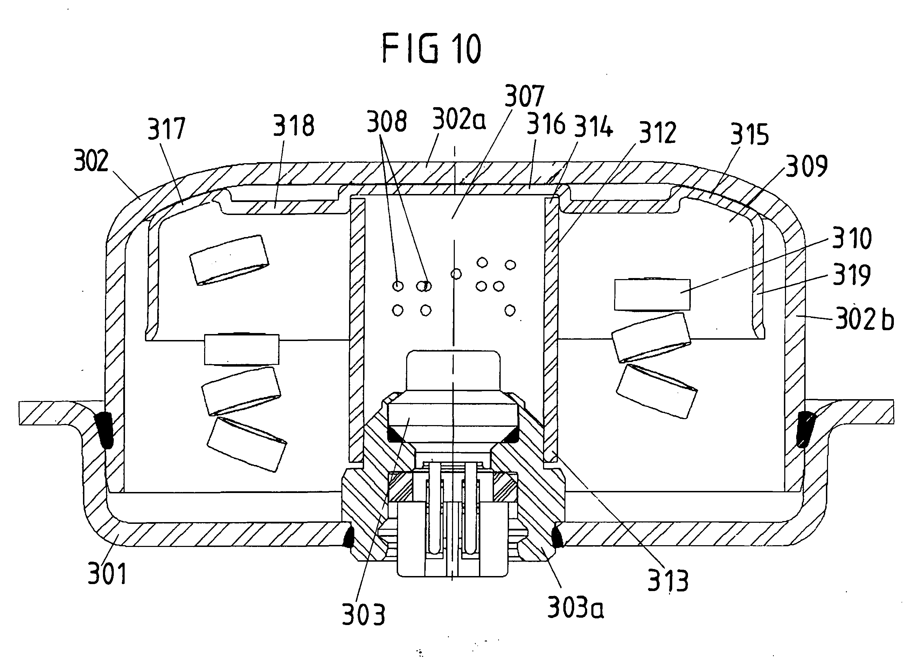

Der in der Fig. 10 dargestellte Gasgenerator weist einen Boden 301 und einen Deckel 302 auf. Weiterhin sind eine Zündvorrichtung 303 und eine Zündvorrichtungsaufnahme 303a vorgesehen, die beide in den Gasgenerator hineinragen. Ein erstes Ende 313 eines Rohres 312 ist durch Presssitz mit der Zündvorrichtungsaufnahme 303a verbunden. Das Rohr 312 umschließt die erste Kammer 307 für die Aufnahme der Treibladung 308. Die Treibladung 308 liegt in Form von Granulat vor. Im Bereich des Deckels können in der Kammer 307 Formelemente angeordnet sein. Hierbei handelt es sich um besondere Treibstoffe, die durch ihre Charakteristik eine Zündung bei niedrigen Temperaturen sicherstellen. Diese Formelemente sind in den Figuren nicht dargestellt.

Im Gasgenerator ist ein elastisch verformbares Gasleitblech 315 angeordnet, das einen napfförmiger Abschnitt 316 aufweist, der innen am Deckel 302 anliegt. Weiterhin ist ein ringförmiger Abschnitt 317 vorhanden, der ebenfalls innen am Deckel 302 anliegen kann. Zwischen den Abschnitten 316 und 317 erstreckt sich eine ringförmige Sicke 318. Diese Sicke unterstützt die Elastizität des Gasleitbleches 315 im oberen Bereich 302a des Deckels 302 und damit die feste Anlage des Abschnitts 316 an den oberen Bereich 302a.

Durch die gezielte Einstellung der Steifigkeit und elastischen Nachgiebigkeit des Gasleitbleches 315 mittels der Sicke 318 wird immer ein guter Kontakt mit dem Deckel 302 des Generatorgehäuses und damit eine gute Frühzündeigenschaft gewährleistet. Weiterhin werden infolge der elastischen Nachgiebigkeit des Gasleitbleches sowohl geometrische Toleranzen von Einzelkomponenten als auch solche, die sich beim Zusammenbau ergeben, ausgeglichen.

Das zweite Ende 314 des Rohres 312 ragt in den napfförmigen Abschnitt 316 hinein, und ist mit diesem durch Presssitz verbunden, so dass eine Vermischung der Treibladung 308 aus der ersten Kammer 307 mit dem Hauptgassatz 310 in der zweiten Kammer 309 unterbunden ist. Zusätzlich ergibt sich eine gute Wärmeleitfähigkeit zwischen dem Rohr 312 und dem Gasleitblech 315. Ein seitlicher Abschnitt 319 des Gasleitblechs 315 verläuft im Abstand zur Seitenwand 302b des Deckels 302.

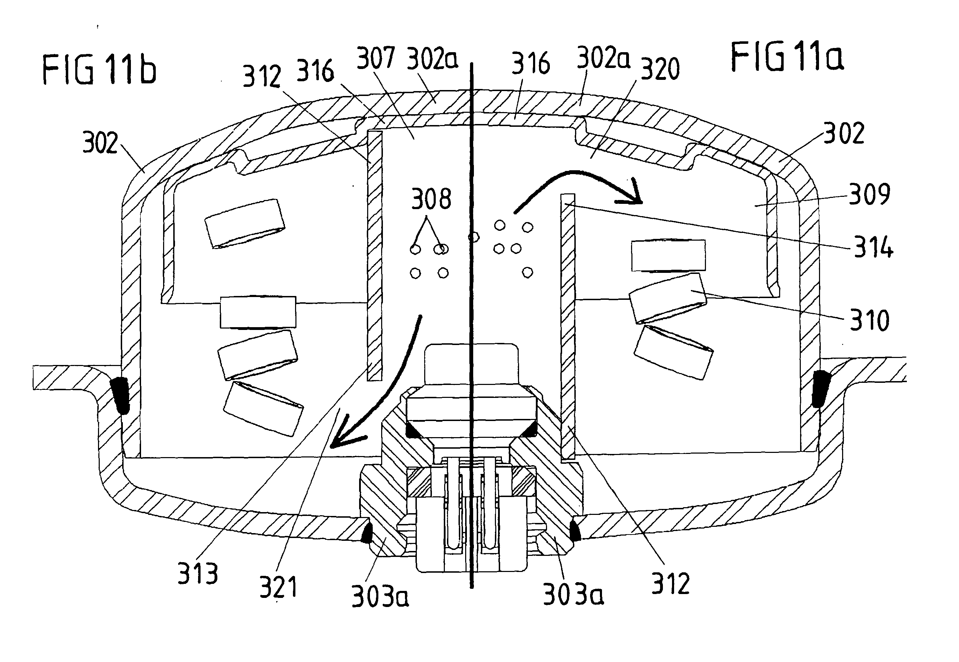

In der Fig. 10 ist der Gasgenerator vor Zündung der Treibladung 308 dargestellt. Die Figuren 11a und 11b zeigen den Gasgenerator nach Zündung der Treibladung 308. Es ist erkennbar, dass der napfförmige Abschnitt 316 und der obere Bereich 302a des Deckels 302 infolge des sich nach Zündung der Treibladung 308 in der ersten Kammer 307 aufbauenden Druckes ausgebeult wird. Dadurch ergeben sich zwei Ausführungsformen, um die erste Kammer 307 mit der zweiten Kammer 309 zu verbinden.

Die erste Möglichkeit ist in der Fig. 11a dargestellt. Bei der Ausführung der Fig. 11a ist der Presssitz zwischen dem Rohr 312 und der Zündvorrichtungsaufnahme 303a stärker als zwischen dem Rohr 312 und der Seitenwand des napfförmigen Abschnitts 316. Dadurch ist gewährleistet, dass sich das Rohr 312 nur an seinem zweiten Ende 314 von seiner Befestigung löst, so dass ein Zwischenraum 320 zwischen dem zweiten Ende 314 und dem napfförmigen Abschnitt 316 entsteht, durch den das in der ersten Kammer 307 erzeugte Gas in die zweite Kammer 309 strömen kann, um dort den Hauptgassatz 310 zu entzünden.

Die zweite Möglichkeit ist in der Fig. 11b dargestellt. Bei der Ausführung der Fig. 11b ist der Presssitz zwischen dem Rohr 312 und der Seitenwand des napfförmigen Abschnitts 316 stärker als der Presssitz zwischen dem Rohr 312 und der Zündvorrichtungsaufnahme 303a. Dadurch ist gewährleistet, dass sich das Rohr 312 nur an seinem ersten Ende 313 von der Zündvorrichtungsaufnahme 303a löst. So entsteht ein Zwischenraum 321 zwischen dem ersten Ende 313 und der Zündvorrichtungsaufnahme 303a, durch den das in der ersten Kammer 307 erzeugte Gas in die zweite Kammer 309 strömen kann, um dort den Hauptgassatz 310 zu entzünden.

Alternativ kann das Gasgeneratorgehäuse auf der Seite des ersten Rohrendes 313 bzw. der Zündvorrichtung 303 durch die nach der Zündung der Treibladung 308 im Rohr entstehende Druckwelle so verformbar sein, dass der Zwischenraum zwischen dem ersten Ende 313 des Rohres 312 und der Zündvorrichtung 303 und damit die Verbindung zwischen der ersten und der zweiten Kammer 307 bzw. 309 entsteht, oder dass der Zwischenraum zwischen dem zweiten Ende 314 des Rohres 312 und dem napfförmigen Abschnitt 316 und somit die Verbindung zwischen der ersten und der zweiten Kammer 307 bzw. 309 entsteht. Obwohl diese alternative Verformung in den Figuren 11a und 11b nicht dargestellt ist, entstehen aber dort Zwischenräume, die den Zwischenräumen 320 und 321 entsprechen.

## Patentansprüche

1. Gasgenerator für ein Airbagmodul mit einem Gasgeneratorgehäuse (2), in dem eine erste Kammer (6) für die Aufnahme einer Treibladung (7) zur Entzündung eines in einer zweiten Kammer (9) enthaltenen Hauptgassatzes sowie eine Zündvorrichtung (3) für die Entzündung der Treibladung (7) vorgesehen sind, und dass die erste Kammer (6) für die Aufnahme der Treibladung (7) durch ein Rohr (4) begrenzt ist, an dessen erstem Ende (5) die Zündvorrichtung (3) angeordnet ist
**dadurch gekennzeichnet,**
**dass** das zweite Ende (8) des Rohres (4) so an das Gasgeneratorgehäuse (2) heranreicht, dass es an dem Gasgeneratorgehäuse (2) anliegt oder zwischen dem zweiten Ende (8) des Rohres (4) und dem Gasgeneratorgehäuse (2) lediglich ein geringer Spalt vorhanden ist, so dass die erste (6) und die zweite Kammer (9) so gegeneinander abgetrennt sind, dass keine Teile der Treibladung (7) über das zweite Ende (8) des Rohres (4) vor Zündung der Treibladung (7) in die zweite Kammer (9) gelangen können, und dass das Gasgeneratorgehäuse (2) dort durch den nach Zündung der Treibladung (7) im Rohr (4) entstehenden Druck so verformbar ist, dass ein Zwischenraum (11) zwischen dem zweiten Rohrende (8) und dem Gasgeneratorgehäuse (2) entsteht, so dass die bei Zündung der Treibladung (7) sich bildenden heißen Gase durch den Zwischenraum (11) zwischen dem Rohrende (8) und dem Gasgeneratorgehäuse (2) aus der ersten (6) in die zweite Kammer (9) mit dem Hauptgassatz (10) strömen können.

2. Gasgenerator für ein Airbagmodul mit einem Gasgeneratorgehäuse (2), in dem eine erste Kammer (6) für die Aufnahme einer Treibladung (7) zur Entzündung eines in einer zweiten Kammer (9) enthaltenen Hauptgassatzes sowie eine Zündvorrichtung (3) für die Entzündung der Treibladung (7) vorgesehen sind, und dass die erste Kammer (6) für die Aufnahme der Treibladung (7) durch ein Rohr (14) begrenzt ist, an dessen erstem Ende die Zündvorrichtung (3) angeordnet ist, **dadurch gekennzeichnet, dass** zwischen dem Gasgeneratorgehäuse (2) und dem zweiten Ende (15) des Rohres (14) ein Zwischenraum (16) vorgesehen ist, der durch eine Folie (17) verschlossen ist, die nach Zündung der Treibladung (7) durch den Druck in der ersten Kammer (6) aufreißbar ist.

3. Gasgenerator nach mindestens einem der vorhergehenden Ansprüche, **dadurch gekennzeichnet, dass** sich bei Verwendung eines topförmigen Gasgenerators das Rohr (4) zwischen der sich vom Boden (1) des Gasgenerators in diesen erstreckenden Zündvorrichtung (3) und dem Deckel (2) des Gasgenerators erstreckt.

4. Gasgenerator nach Anspruch 1, **dadurch gekennzeichnet, dass** die erste Kammer (202) zum Anordnen einer pyrotechnische Ladung (291) vorgesehen ist, dass das Gehäuse (203) die erste Kammer (202) zumindest teilweise umgibt, dass das Rohr (204) einen Abschnitt der Kammer (202) begrenzt, und dass ein relativ zum Rohr (204) bewegbares Teil (205) vorgesehen ist, das die Kammer (202) zum Gehäuse (203) hin begrenzt und dass Mittel (206) zum Ausüben einer Rückstellkraft auf das Teil (205) vorgesehen sind, um dieses in thermischem Kontakt mit dem Gehäuse (203) zu halten, so dass die Kammer (202) über das bewegbare Teil (205) und das Gehäuse (203) in thermischem Kontakt mit der Umgebung des Gehäuses (203) steht, wobei die Mittel (206) zum Ausüben einer Rückstellkraft das bewegbare Teil (205) gegen das Gehäuse (203) vorspannen.

5. Gasgenerator nach Anspruch 4, **dadurch gekennzeichnet, dass** das bewegbare Teil (205) eine in dem Ende (241) des Rohres (204) ausgebildete Öffnung (242) zumindest teilweise abdeckt, wobei das bewegbare Teil (205) flanschartig ausgebildet ist, und wobei sich ein erster Abschnitt (251) entlang eines inneren Umfangs des Rohres (204) erstreckt und ein zweiter Abschnitt (252) die Öffnung (242) zumindest teilweise abdeckt.

6. Gasgenerator nach Anspruch 4, **dadurch gekennzeichnet, dass** die Mittel (206) ein elastisches Element aufweisen, das zwischen dem Ende (241) des Rohres (204) und der Innenseite des Gehäuses (203) angeordnet ist und das bis zu einer Temperatur wärmebeständig ist, die oberhalb der Zündtemperatur der pyrotechnischen Ladung liegt.

7. Gasgenerator nach Anspruch 4, **dadurch gekennzeichnet, dass** die Mittel (206) zum Ausüben einer Rückstellkraft ein elastisches Element aufweisen, das gleichzeitig die erste Kammer (202) gegenüber der zweiten Kammer (208) abdichtet.

8. Gasgenerator nach einem der Ansprüche 4 bis 7, **dadurch gekennzeichnet, dass** das bewegbare Teil (205) bei Einwirken eines Gasdrucks in der Kammer (202), der bei Zünden der pyrotechnischen Ladung (291) entsteht, eine Ausströmöffnung (523) freigibt, aus der Gas aus der Kammer (202) ausströmen kann, wobei insbesondere über die Ausströmöffnung (523) Gas aus der ersten Kammer (202) in die zweite Kammer (208) überströmen kann.

9. Gasgenerator nach einem der Ansprüche 4 bis 8, **dadurch gekennzeichnet, dass** das bewegbare Teil (205) eine Sollbruchstelle (522) aufweist, die bricht, wenn der Gasdruck in der Kammer (202) einen bestimmten Wert übersteigt, so dass das bewegbare Teil (205) im Bereich der Sollbruchstelle (522) eine Ausströmöffnung (523) freigibt.

10. Gasgenerator nach Anspruch 1, **dadurch gekennzeichnet, dass** die erste Kammer (307) für die Aufnahme der Treibladung (308) durch das Rohr (312) begrenzt ist, an dessen erstem Ende (313) die Zündvorrichtung (303) angeordnet ist, und dessen zweites Ende (314) in engem Kontakt zu einem elastischen Gasleitblech (315) steht, das zumindest abschnittsweise innen am Gasgeneratorgehäuse anliegt.

11. Gasgenerator nach Anspruch 10, **dadurch gekennzeichnet, dass** das Gasleitblech (315) einen napfförmigen Abschnitt (316) aufweist, in den das zweite Ende (314) des Rohres (312) eingreift, wobei das zweite Ende (314) eng an der Seitenwand des napfförmigen Abschnitts (316) anliegt, ohne mit diesem über Hilfsmittel verbunden zu sein.

12. Gasgenerator nach Anspruch 11, **dadurch gekennzeichnet, dass** das Rohr (312) im Bereich seines ersten Endes (313) mit seiner Innenwand mit Presssitz an einer Zündvorrichtungsaufnahme (303a) und im Bereich des zweiten Endes (314) mit seiner Außenwand mit Presssitz an der Seitenwand des napfförmigen Abschnitts (316) anliegt.

13. Gasgenerator nach einem der Ansprüche 10 bis 12, **dadurch gekennzeichnet, dass** das Generatorgehäuse und das Gasleitblech (315) im Bereich des zweiten Endes (314) des Rohres (312) durch den nach Zündung der Treibladung (308) im Rohr (312) entstehenden Druck so verformbar sind, dass ein Zwischenraum (320) zwischen dem zweiten Ende (314) des Rohres (312) und dem Gasleitblech (315) und damit eine Verbindung zwischen der ersten und der zweiten Kammer (307,309) vorhanden ist, oder ein Zwischenraum (321) zwischen dem ersten Ende (313) des Rohres (312) und der Zündvorrichtung (303) und damit eine Verbindung zwischen der ersten und der zweiten Kammer (307, 309) vorhanden ist.

14. Gasgenerator nach einem der Ansprüche 10 bis 13, **dadurch gekennzeichnet, dass** das Gasgeneratorgehäuse auf der Seite des ersten Endes (313) des Rohres(312) bzw. der Zündvorrichtung (303) durch die nach der Zündung der Treibladung (308) im Rohr (312) entstehende Druckwelle so verformbar ist, dass ein Zwischenraum (321) zwischen dem ersten Ende (313) des Rohres (312) und der Zündvorrichtung (303) und damit eine Verbindung zwischen der ersten und der zweiten Kammer (307, 309) vorhanden ist, oder ein Zwischenraum (320) zwischen dem zweiten Ende (314) des Rohres (312) und dem Gasleitblech (315) und damit eine Verbindung zwischen der ersten und der zweiten Kammer (307, 309) vorhanden ist.

15. Fahrzeuginsassen-Rückhaltesystem mit einem Gassackmodul, das einen Gasgenerator (301) gemäß einem der vorhergehenden Ansprüche aufweist.

## Claims

1. Gas generator for an airbag module with a gas generator housing (2) in which a first chamber (6) for receiving a propellant (7) for igniting a main gas set in a second chamber (9) and an ignition device (3) for the ignition of the propellant (7) are provided, and that the first chamber (6) for receiving the propellant (7) is restricted by a pipe (4), on the first end (5) of which the ignition device (3) is arranged
**characterized in that**
the second end (8) of the pipe (4) reaches the gas generator housing (2) such that the second end (8) rests against the gas generator housing (2) or a small gap is present between the second end of the pipe and the gas generator housing, such that the first (6) and the second chamber (9) are separated from each other such that no parts of the propellant (7) may reach the second chamber (9) via the second end (8) of the pipe (4) before the ignition of the propellant (7), and that the generator housing (2) is deformable there by the pressure generated after ignition of the propellant (7) in the pipe (4) such that an intermediate space (11) is generated between the second pipe end (8) and the gas generator housing (2) so that the hot gases generated by the ignition of the propellant (7) can flow through the intermediate space (11) between the pipe end (8) and the gas generator housing (2) from the first (6) into the second chamber (9) containing the main gas set (10).

2. Gas generator for an airbag module with a gas generator housing (2) in which a first chamber (6) for receiving a propellant (7) for igniting a main gas set in a second chamber (9) and an ignition device (3) for the ignition of the propellant (7) are provided, and that the first chamber (6) for receiving the propellant (7) is restricted by a pipe (14), on the first end of which the ignition device (3) is arranged, **characterized in that** between the gas generator housing (2) and the second end (15) of the pipe (14) an intermediate space (16) is provided, which is blocked by a film (17), which can be torn open by the pressure in the first chamber (6) after ignition of the propellant (7).

3. Gas generator according to at least one of the preceding claims, **characterized in that** by using a cup-shaped gas generator the pipe (4) extends between the ignition device (3) extending from the bottom (1) of the gas generator into the gas generator and the cover (2) of the gas generator.

4. Gas generator according to claim 1, **characterized in that** the first chamber (202) for arranging a pyrotechnical load (291) is provided, that the housing (203), encloses the chamber (202) at least partially, that the pipe (204) restricts a section of the chamber (202), and that a part (205) movable relatively to the pipe (204) is provided, which restricts the chamber (202) towards the housing (203) and that means (206) are provided for exerting a restoring force on the part (205) in order to keep it in thermal contact with the housing (203) such that the chamber (202) is in thermal contact with the surrounding of the housing (203) via the movable part (205) and the housing (203), wherein the means (206) for exerting a restoring force preload the movable part (205) against the housing (203).

5. Gas generator according to claim4, **characterized in that** the movable part (205) covers at least partially an opening (242) formed in the end (241) of the pipe (204), wherein the movable part (205) is formed flange-like, whereby the first section (251) extends along an inner circumference of the pipe (204) and a second section (252) covers the opening (242) at least partially.

6. Gas generator according to claim 4, **characterized in that** the means (206) have an elastic element which is arranged between the end (241) of the pipe (204) and the inner surface of the housing (203) and which is temperature-resistant up to a temperature which is above the ignition temperature of the pyrotechnical load.

7. Gas generator according to claim 4, **characterized in that** the means (206) for exerting a restoring force has an elastic element, which simultaneously seals the first chamber (202) against the second chamber (208).

8. Gas generator according to one of the claims 4 to 7, **characterized in that** the movable part (205) releases under the impact of a gas pressure in the chamber (202) generated by igniting the pyrotechnical load (291) an outflow opening (523) through which the gas can flow out of the chamber (202), wherein particularly gas can flow out of the first chamber (202) via the outflow opening (521) into the second chamber (208).

9. Gas generator according to one of the claims 4 to 8, **characterized in that** the movable part (205) has a pre-determined breaking point (522), which breaks when the gas pressure in the chamber (202) exceeds a certain value so that the movable part (205) releases in the area of the predetermined breaking point (522) an outflow opening (523).

10. Gas generator according to claim 1, **characterized in that** the first chamber (307) for receiving the propellant (308) is restricted by the pipe (312), on the first end (313) of which the ignition device (303) is arranged and the second end (314) of which is in close contact to an elastic gas guiding plate (315), which at least sectionally rests on the inside against the gas generator housing.

11. Gas generator according to claim 10, **characterized in that** that the gas guiding plate (315) has a cup-shaped section (316), into which the second end (314) of the pipe (312) projects, whereby the second end (314) rests closely against the side wall of the cup-shaped section (316) without being connected to it via auxiliary means.

12. Gas generator according to claim 11, **characterized in that** the pipe (312) rests in the area of its first end (313) with its inner wall with pressed fit against a receptacle for the ignition device (303a) and in the area of the second end (314) with its outer wall with pressed fit against a side wall of the cup-shaped section (316).

13. Gas generator according to one of the claims 10 to 12, **characterized in that** the generator housing and the gas guiding plate (315) are deformable in the area of the second end (314) of the pipe (312) by the pressure generated after ignition of the propellant (308) in the pipe (312) such that a space (320) is present between the second end (314) of the pipe (312) and the gas guiding plate (315) and therefore a connection between the first and the second chamber (307, 309) is present or a space (321) between the first end (314) of the pipe (312) and the ignition device (303) and therefore a connection between the first and the second chamber (307, 309) is present.

14. Gas generator according to one of the claims 10 to 13, **characterized in that** the gas generator housing is deformable on the side of the first end (313) of the pipe (312) or the ignition device (303) by the pressure wave generated after ignition of the propellant (308) in the pipe (312) such that a space (321) between the first end (313) of the pipe (312) and the ignition device (303) and therefore a connection between the first and the second chamber (307, 309) is present, or a space (320) between the second end (314) of the pipe (312) and a gas guiding plate (315) and therefore a connection between the first and the second chamber (307, 309) is present.

15. Vehicle occupant restraining system with an airbag module having a gas generator (301) according to one of the preceding claims.

## Revendications

1. Générateur de gaz pour un module d'airbag avec un boîtier de générateur de gaz (2), dans lequel il est prévu une première chambre (6) destinée à recevoir une charge propulsive (7) pour l'allumage d'une unité de gaz principale contenue dans une seconde chambre (9) ainsi qu'un dispositif d'allumage (3) destiné à allumer la charge propulsive (7), et en ce que la première chambre (6) destinée à recevoir la charge propulsive (7) est délimitée par un tube (4), sur la première extrémité (5) duquel est disposé le dispositif d'allumage (3),
**caractérisé en ce que**
la seconde extrémité (8) du tube (4) atteint le boîtier de générateur de gaz de sorte qu'elle repose sur le boîtier de générateur de gaz (2) ou juste une petite fente soit comprise entre la seconde extrémité (8) du tube (4) et le boîtier de générateur de gaz (2) de manière que la première (6) et la seconde chambre (9) soient séparées l'une contre l'autre de sorte qu'aucune partie de la charge propulsive (7) ne puisse parvenir par la seconde extrémité (8) du tube (4) avant l'allumage de la charge propulsive (7) dans la seconde chambre (9), et que le boîtier de générateur de gaz (2) puisse y être déformé par la pression apparue après l'allumage de la charge propulsive (7) dans le tube (4) de sorte qu'un espace intermédiaire (11) apparaisse entre la seconde extrémité de tube (8) et le boîtier de générateur de gaz (2) de telle manière que les gaz chauds se formant lors de l'allumage de la charge propulsive (7) puissent passer par l'espace intermédiaire (11) entre l'extrémité de tube (8) et le boîtier de générateur de gaz (2), de la première (6) à la seconde chambre (9) contenant l'unité de gaz principale (10).

2. Générateur de gaz pour un module d'airbag avec un boîtier de générateur de gaz (2), dans lequel il est prévu une première chambre (6) destinée à recevoir une charge propulsive (7) pour l'allumage d'une unité de gaz principale contenue dans une seconde chambre (9) ainsi qu'un dispositif d'allumage (3) destiné à allumer la charge propulsive (7), et en ce que la première chambre (6) destinée à recevoir la charge propulsive (7) est délimitée par un tube (14), sur la première extrémité duquel est disposé le dispositif d'allumage (3), **caractérisé en ce qu'**un espace intermédiaire (16) est prévu entre le boîtier de générateur de gaz (2) et la seconde extrémité (15) du tube (14), lequel espace intermédiaire est fermé par un film (17) qui peut être déchiré après l'allumage de la charge propulsive (7) par la pression de la première chambre (6).

3. Générateur de gaz selon au moins l'une quelconque des revendications précédentes, **caractérisé en ce que** lors de l'utilisation d'un générateur de gaz en forme de pot, le tube (4) s'étend entre le dispositif d'allumage (3) partant du fond (1) du générateur de gaz dans celui-ci et le couvercle (2) du générateur de gaz.

4. Générateur de gaz selon la revendication 1, **caractérisé en ce que** la première chambre (202) est prévue pour l'agencement d'une charge pyrotechnique (291), **en ce que** le boîtier (203) entoure au moins partiellement la première chambre (202), **en ce que** le tube (204) délimite une section de chambre (202), et **en ce qu'**une partie (205) mobile par rapport au tube (204) est prévue, laquelle délimite la chambre (202) par rapport au boîtier (203) et **en ce que** des moyens (206) sont prévus pour exercer une force de rappel sur la partie (205) afin de la maintenir en contact thermique avec le boîtier (203) de sorte que la chambre (202) soit en contact thermique avec l'environnement du boîtier (203) par la partie mobile (205) et le boîtier (203), sachant que les moyens (206) pour l'exercice d'une force de rappel précontraignent la partie mobile (205) contre le boîtier (203).

5. Générateur de gaz selon la revendication 4, **caractérisé en ce que** la partie mobile (205) recouvre au moins en partie une ouverture (242) réalisée dans l'extrémité (241) du tube (204), sachant que la partie mobile (205) est réalisée comme une bride, et sachant qu'une première section (251) s'étend le long d'une périphérie intérieure du tube (204) et une seconde section (252) recouvre au moins partiellement l'ouverture (242).

6. Générateur de gaz selon la revendication 4, **caractérisé en ce que** les moyens (206) présentent un élément élastique qui est disposé entre l'extrémité (241) du tube (204) et le côté intérieur du boîtier (203) et qui est résistant à la chaleur jusqu'à une température supérieure à la température d'allumage de la charge pyrotechnique.

7. Générateur de gaz selon la revendication 4, **caractérisé en ce que** les moyens (206) pour l'exercice d'une force de rappel présentent un élément élastique qui rend étanche simultanément la première chambre (202) par rapport à la seconde chambre (208).

8. Générateur de gaz selon au moins l'une quelconque des revendications 4 à 7, **caractérisé en ce que** la partie mobile (205) libère sous l'action d'une pression de gaz dans la chambre (202) qui apparaît lors de l'allumage de la charge pyrotechnique (291), une ouverture de sortie (523), de laquelle du gaz peut sortir de la chambre (202), sachant qu'en particulier du gaz peut se répandre par l'ouverture de sortie (523) de la première chambre (202) à la seconde chambre (208).

9. Générateur de gaz selon au moins l'une quelconque des revendications 4 à 8, **caractérisé en ce que** la partie mobile (205) présente un point de rupture privilégiée (522) qui rompt lorsque la pression de gaz dans la chambre (202) dépasse une valeur déterminée de sorte que la partie mobile (205) libère une ouverture de sortie (523) dans la zone du point de rupture privilégiée (522).

10. Générateur de gaz selon la revendication 1, **caractérisé en ce que** la première chambre (307) pour la réception de la charge propulsive (308) est délimitée par le tube (312), sur la première extrémité duquel (313) est disposé le dispositif d'allumage (303), et dont la seconde extrémité (314) est en contact étroit avec une tôle de conduction de gaz élastique (315) qui repose au moins par endroits à l'intérieur sur le boîtier de générateur de gaz.

11. Générateur de gaz selon la revendication 10, **caractérisé en ce que** la tôle de conduction de gaz (315) présente une section en forme de cuvette (316), dans laquelle la seconde extrémité (314) du tube (312) s'engage, sachant que la seconde extrémité (314) repose étroitement sur la paroi latérale de la section en forme de cuvette (316) sans être reliée à celle-ci par des moyens auxiliaires.

12. Générateur de gaz selon la revendication 11, **caractérisé en ce que** le tube (312) repose dans la zone de sa première extrémité (313) avec sa paroi intérieure en ajustage serré contre un logement de dispositif d'allumage (303a) et dans la zone de la seconde extrémité (314) avec sa paroi extérieure en ajustage serré contre la paroi latérale de la section en forme de cuvette (316).

13. Générateur de gaz selon l'une quelconque des revendications 10 à 12, **caractérisé en ce que** le boîtier de générateur et la tôle de conduction de gaz (315) sont déformables dans la zone de la seconde extrémité (314) du tube (312) par la pression apparue après l'allumage de la charge propulsive (308) dans le tube (312) de sorte qu'un espace intermédiaire (320) soit présent entre la seconde extrémité (314) du tube (312) et la tôle de conduction de gaz (315) et ainsi une liaison entre la première et la seconde chambres (307, 309) ou un espace intermédiaire (321) soit présent entre la première extrémité (313) du tube (312) et le dispositif d'allumage (303) et ainsi une liaison entre la première et la seconde chambres (307, 309).

14. Générateur de gaz selon l'une quelconque des revendications 10 à 13, **caractérisé en ce que** le boîtier de générateur de gaz est déformable sur le côté de la première extrémité (313) du tube (312) ou du dispositif d'allumage (303) par l'onde de pression apparue après l'allumage de la charge propulsive (308) dans le tube (312) de sorte qu'un espace intermédiaire (321) soit présent entre la première extrémité (313) du tube (312) et le dispositif d'allumage (303) et ainsi une liaison entre la première et la seconde chambres (307, 309), ou un espace intermédiaire (320) soit présent entre la seconde extrémité (314) du tube (312) et la tôle de conduction de gaz (315) et ainsi une liaison entre la première et la seconde chambres (307, 309).

15. Système de retenue d'occupant de véhicule avec un module de sac à gaz qui présente un générateur de gaz (301) selon l'une quelconque des revendications précédentes.
